# FASCICULE DE BREVET EUROPEEN

(11) **EP 2 864 399 B1**
(45) Date de publication et mention de la délivrance du brevet: **17.01.2018**
(21) Numéro de dépôt: 13737325.4
(22) Date de dépôt: 17.06.2013
(51) Int. Cl.: C08J 5/24, C08J 5/04, C08J 5/10

(54) **PROCEDE DE FABRICATION D'UN MATERIAU FIBREUX PRE-IMPREGNE DE POLYMERE THERMOPLASTIQUE**
VERFAHREN ZUR HERSTELLUNG VON FASERMATERIALEN, DIE MIT EINEM THERMOPLASTISCHEN POLYMER VOR-IMPRÄGNIERT SIND
PROCESS FOR MAKING A FIBROUS MATERIAL PRE IMPREGNATED WITH THERMOPLASTIC POLYMER

(30) Priorité: 22.06.2012 FR 1255907
(43) Date de publication de la demande: 29.04.2015
(73) Titulaire: Arkema France, 92700 Colombes (FR)
(72) Inventeur: BORDERE, Serge, F-64110 Jurancon (FR); DELPRAT, Patrick, F-64230 Lescar (FR); GAILLARD, Patrice, F-64370 Hagetaubin (FR); KORZHENKO, Oleksadr, F-64000 Pau (FR)
(74) Mandataire: Killis, Andréas
(86) Numéro de dépôt international: PCT/FR2013/051405
(87) Numéro de publication internationale: WO 2013/190224

(56) Documents cités:
- EP-A2- 0 102 158
- DE-A1- 3 840 374
- FR-A1- 2 918 081
- FR-A1- 2 922 552
- US-A- 5 965 648
- US-A1- 2009 062 412
- DATABASE WPI Week 199213 Thomson Scientific, London, GB; AN 1992-099440 XP002689147, & JP 3 273062 A (NIPPON STEEL CHEM CO) 4 décembre 1991 (1991-12-04)
- DATABASE WPI Week 199005 Thomson Scientific, London, GB; AN 1990-034427 XP002689148, & JP 1 313532 A (ASAHI CHEM IND CO LTD) 19 décembre 1989 (1989-12-19)

## Description

La présente invention concerne un procédé de fabrication d'un matériau fibreux pré-imprégné de polymère thermoplastique.

On entend par « matériau fibreux » les tissus, les feutres, les non tissés, se présentant sous forme de bandes, nappes, tresses, mèches ou morceaux. Il comporte un assemblage d'une ou plusieurs fibres. Lorsque les fibres sont continues, leur assemblage constitue des tissus. Lorsque les fibres sont courtes, leur assemblage constitue un feutre ou un non tissé.

Les fibres pouvant entrer dans la composition du matériau fibreux sont plus spécialement des fibres de carbone, des fibres de verre, des fibres à base de polymères, ou des fibres végétales, utilisées seules ou en mélange.

De tels matériau fibreux pré-imprégnés sont notamment destinés à la réalisation de matériaux composites légers pour la fabrication de pièces mécaniques ayant une structure à trois dimensions et possédant des propriétés de bonne résistance mécanique, thermique et capables d'évacuer des charges électrostatiques, c'est-à-dire des propriétés compatibles avec la fabrication de pièces dans le domaine de la mécanique, de l'aéronautique et nautique, et de l'électronique.

De tels matériaux fibreux pré-imprégnés sont également appelés matériaux composites. Ils comprennent le matériau fibreux constitué de fibres dites de renfort et d'une matrice constituée par le polymère d'imprégnation. Le premier rôle de cette matrice est de maintenir les fibres de renfort dans une forme compacte et de donner la forme voulue au produit final. Une telle matrice sert entre autres à protéger les fibres de renfort contre l'abrasion et un environnement agressif, à contrôler l'aspect de surface et à disperser les éventuelles charges entre les fibres. Le rôle de cette matrice est important pour la tenue à long terme du matériau composite, notamment en ce qui concerne la fatigue et le fluage.

Il est connu d'utiliser des tissus réfractaires pré-imprégnés d'une résine pour réaliser une matrice thermiquement isolante afin d'assurer la protection thermique de dispositifs mécaniques soumis à de fortes températures comme cela peut être le cas dans le domaine de l'aéronautique ou de l'automobile. On pourra se reporter au brevet européen n°0 398 787 qui décrit une couche de protection thermique comprenant un tissu réfractaire, destinée à protéger la virole d'une chambre de moteur statoréacteur. Outre la complexité de réalisation de cette couche de protection thermique, le tissu réfractaire noyé dans cette couche ne remplit que la fonction de bouclier thermique.

On a également recours, depuis quelques années, à des fibres composites pour fabriquer, notamment, diverses pièces aéronautiques ou automobiles. Ces fibres composites, qui se caractérisent par de bonnes résistances thermomécaniques et chimiques, sont constituées d'un renfort filamentaire formant armature, destinée à répartir les efforts de résistance à la traction, à la flexion ou à la compression, à conférer dans certains cas une protection chimique au matériau et à lui donner sa forme.

On peut par exemple se reporter à la demande de brevet FR2 918 081 qui décrit un procédé d'imprégnation de fibres continues par une matrice polymérique composite renfermant un polymère thermoplastique. Pour améliorer l'imprégnation des fibres de renfort, ce document enseigne l'utilisation d'un plastifiant et dispersant de nanotubes de carbones (NTC) dans ladite matrice thermoplastique, ce qui modifie sa température de transition vitreuse Tg.

Les procédés de fabrication de pièces composites à partir de ces fibres enrobées comprennent diverses techniques telles que, par exemple, le moulage au contact, le moulage par projection, le drapage autoclavé ou le moulage basse pression.

Une technique pour réaliser des pièces creuses est celle dite de l'enroulement filamentaire, qui consiste à imprégner des fibres sèches d'une résine puis à les enrouler sur un mandrin formé d'armatures et de forme adaptée à la pièce à fabriquer. La pièce obtenue par enroulement est ensuite durcie par chauffage. Une autre technique, destinée à réaliser des plaques ou des coques, consiste à imprégner des tissus de fibres puis à les presser dans un moule afin de consolider le composite stratifié obtenu.

Pour la fabrication de matériau polymérique à renfort fibreux, on utilise généralement une étape d'ensimage, qui consiste à déposer un film de polymère thermoplastique sur des fibres. Ainsi le procédé de fabrication de matériau pre-imprégné décrit dans le document US 4, 541,884 comprend, comme étape d'enduction des fibres, le passage en continu de fibres dans un bain fondu de polymère thermoplastique contenant un solvant organique tel que la benzophénone ; ce solvant permettant d'adapter la viscosité du mélange fondu et d'assurer une bonne enduction des fibres. Les fibres pré-imprégnées de polymères sont ensuite mises en forme (par exemple découpées en bandes puis disposées sous une presse, pour la réalisation des pièces de structure, puis chauffées à une température supérieure à la température de fusion du polymère pour assurer la cohésion du matériau et notamment l'adhérence du polymère sur les fibres.

Selon la nature chimique du polymère, les températures de chauffe peuvent monter à des températures supérieures à 250 °C, et même supérieure à 320°C, températures très supérieures à la température d'ébullition du solvant, entraînant un départ brusque du solvant, provoquant des défauts dans la pièce et donc un manque de reproductibilité du procédé ainsi que des risques d'explosion mettant en danger les opérateurs.

Pour éviter l'utilisation de solvant organique, la demanderesse a trouvé une solution décrite dans la demande de brevet WO2011/030052 qui constitue l'état de la technique le plus proche. Ce document décrit un procédé d'imprégnation d'un matériau fibreux, comprenant une première série de fibres dites fibres de renfort, par un polymère thermoplastique, consistant en une deuxième série de fibres. Le procédé consiste à mettre en contact les deux séries de fibres, puis à chauffer les fibres à une température supérieure à la température de fusion du polymère d'imprégnation. Ce procédé nécessite donc que le matériau fibreux, comprenant la première série de fibres, présente une température de fusion Tf supérieure à la température de fusion du polymère d'imprégnation constituant la deuxième série de fibres, afin de ne pas être dégradé lors du chauffage.

Quelque soient les solutions utilisées à ce jour pour l'imprégnation du matériau fibreux, y compris avec la solution décrite dans l'état de la technique constitué par la demande de brevet WO2011/030052, la demanderesse s'est aperçu que l'imprégnation des matériaux fibreux restait à ce jour une étape difficile à mettre en oeuvre. En effet, si les fibres du matériau fibreux (dites fibres de renfort) ne sont pas correctement imprégnées, elles se dégradent au moment de la mise en forme du matériau composite par chauffage à une température élevée, et au moins égale à la température de fusion de la matrice thermoplastique. Or, le fait d'avoir des fibres mal imprégnées, engendre une dégradation de celles-ci et cette dégradation entraine par la suite des défauts dans le matériau composite.

La demanderesse s'est notamment aperçu que, jusqu'à présent, le mouillage des fibres n'est que partiel car la matrice d'imprégnation ne s'étale pas correctement. Dans ce cas, les fibres présentent des zones « à nu », c'est-à-dire des zones où lesdites fibres ne sont pas imprégnées du polymère. Lesdites zones à nu sont fragilisées et se dégradent à la chaleur, ce qui engendre des défauts dans le produit final. Dans d'autres zones, il se forme des gouttes de polymère sur les fibres de renfort, ces gouttes pouvant être à l'origine de la création de bulles et engendrer d'autres défauts dans le matériau composite final.

De plus, pour les matériaux fibreux pré-imprégnés, on réalise une mise en forme à une température de chauffe supérieure à la température de fusion Tf du polymère thermoplastique de la matrice d'imprégnation. Et, lorsque les polymères présentent une température de fusion Tf élevée, tels que les Polyamides (PA) et leurs copolymères, les Polycarbonates (PC), le Poly(butylène téréphtalate) (PBT), les Polyéther imides (PEI), le Polyphénylène sulfide (PPS), le Polyethercétonecétone (PEKK), le Polyetherethercétone (PEEK), le Polyméthacrylate de méthyle (PPMA) ; alors il existe un risque élevé de dégradation de la matrice thermoplastique, et que le matériau fibreux ne soit pas bien imprégné et dégradé lors de sa mise en forme. Or, il peut être important, pour certaines pièces de structure devant résister à des températures élevées, et pour réaliser des pièces de géométrie très complexe, d'utiliser des polymères d'imprégnation présentant des températures de fusion élevées.

L'invention a donc pour but de remédier à au moins un des inconvénients de l'art antérieur et plus particulièrement à résoudre ce problème. Pour résoudre ce problème, il est proposé d'abaisser la température de mise en forme du matériau composite formé par le matériau fibreux imprégné de la matrice de polymère thermoplastique. Le fait d'abaisser la température de mise en forme permet ainsi de limiter les risques de dégradation thermique de la matrice thermoplastique et d'avoir une mauvaise imprégnation du matériau fibreux.

La solution proposée par la présente invention répond à tous ces critères et est facile à utiliser dans la fabrication de structures complexes à trois dimensions comme notamment les ailes d'avion, le fuselage d'un avion, la coque d'un bateau, les longerons ou spoilers d'une automobile, ou encore des disques de freins, le corps de vérin ou de volants de direction, ou dans des coques de protection d'éléments électroniques ou enfin dans des pièces d'appareils conçus pour le sport.

A cet effet, l'invention a pour objet un procédé de fabrication d'un matériau fibreux pré-imprégné comprenant une étape d'imprégnation dudit matériau fibreux par une matrice constituée d'un polymère thermoplastique à l'état fondu, caractérisé en ce que préalablement à l'étape d'imprégnation, une étape d'insertion consiste à incorporer dans ledit polymère thermoplastique d'imprégnation, un agent lubrifiant comprenant au moins un oligomère ou un mélange d'oligomères, choisi parmi des oligomères d'ester cyclique, des oligomères d'éther cyclique, des oligomères de composé organominéral ledit au moins un oligomère étant introduit dans ledit polymère thermoplastique d'imprégnation fondu, dans des proportions en poids comprises entre 0,2 et 5%.

Ainsi, l'oligomère, ou le mélange d'oligomères, introduit dans le polymère thermoplastique d'imprégnation à l'état fondu, permet de lubrifier ce dernier. Le polymère thermoplastique étant lubrifié, il devient possible de le transformer, ou de le mettre en forme, à une température inférieure à la température de transformation jusqu'à présent utilisée pour la mise en forme. Un autre avantage de l'utilisation d'un tel oligomère en tant que lubrifiant réside dans le fait qu'il permet de favoriser le mouillage des fibres du matériau fibreux. En effet, le mouillage des fibres de renfort devient total, c'est-à-dire que la matrice d'imprégnation s'étale totalement sur les fibres de renfort et se réparti de manière homogène sur les fibres du matériau fibreux, si bien que celles-ci ne sont pas dégradées lors du chauffage.

L'utilisation de l'oligomère, ou du mélange d'oligomères, en faible teneur dans le polymère thermoplastique, permet donc de lubrifier le polymère thermoplastique, d'abaisser notablement la température de mise en forme du polymère et d'éviter tout risque de dégradation de sa structure et de ses performances finales. Il permet en outre d'améliorer notablement la capacité à imprégner les fibres en fondu et ce sans solvants organiques. De ce fait, l'imprégnation est grandement facilitée et permet l'obtention de bons résultats quelle que soit la méthode d'imprégnation utilisée. Grâce à ces deux avantages conjugués, les performances des fibres du matériau fibreux ne sont plus dégradées lors de la mise en forme du matériau composite. D'autre part par l'effet de l'abaissement de la température de mise en forme, la présente invention permet une réduction de la consommation d'énergie dans ladite mise en forme.

L'invention se rapporte en outre à un matériau composite pré-imprégné comprenant des fibres de renfort enrobées dans une matrice de polymère thermoplastique, caractérisé en ce que la matrice de polymère thermoplastique comprend un agent lubrifiant comprenant au moins un oligomère ou un mélange d'oligomères choisi parmi des oligomères d'ester cyclique, des oligomères d'éther cyclique, des oligomères de composé organominéral ledit au moins un oligomère étant introduit dans ledit polymère thermoplastique d'imprégnation fondu, dans des proportions en poids comprises entre 0,2 et 5%.

### Matrice polymère :

Concernant les polymères thermoplastiques entrant dans la constitution de la matrice d'imprégnation du matériau fibreux, ils peuvent être choisis, sans limitation, parmi :
- les polyéthylènimines (PEI),
- les polyimides (PI),
- les polyoléfines telles que le polyéthylène notamment haute densité, le polypropylène et les copolymères d'éthylène et/ou de polypropylène ;
- les polyuréthanes thermoplastiques (TPU) ;
- les polyesters tels que les polyhydroxyalcanoates ;
- le Polyméthacrylate de méthyle (PPMA),
- les Polycarbonates (PC),
- les polytéréphtalates d'éthylène (PET) ou de butylène (PBT) ;
- les polyphenylenes sulfide (PPS) ;
- les polychlorures de vinyle ;
- les polymères siliconés ou fluorosiliconés ;
- les poly(alcool de vinyle) ;
- les polyaryléther cétones (PAEK :PolyArylEtherKetone) telle que la polyétheréther cétone (PEEK) et la polyéthercétone cétone (PEKK) ;
- les polyamides tels que polyamide tel que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides aromatiques, en particulier les polyphtalamides et l'aramide, et les copolymères blocs, notamment polyamide/polyéther ;
- les polymères fluorés comprenant au moins un monomère de formule (I) :

   CFX=CHX' (I)
où X et X' désignent indépendamment un atome d'hydrogène ou d'halogène (en particulier de fluor ou de chlore) ou un radical alkyle perhalogéné (en particulier perfluoré), et de préférence X=F et X'=H, tels que le poly(fluorure de vinylidène) (PVDF), de préférence sous forme α, les copolymères de fluorure de vinylidène avec par exemple l'hexafluoropropylène (HFP), les copolymères fluoroéthylène / propylène (FEP), les copolymères d'éthylène avec soit le fluoroéthylène/propylène (FEP), soit le tétrafluoroéthylène (TFE), soit le perfluorométhylvinyl éther (PMVE), soit le chlorotrifluoroéthylène (CTFE), certains de ces polymères étant notamment commercialisés par la société ARKEMA sous la dénomination Kynar®;
- les polymères (ou résines) phénoxy, et
- leurs mélanges.
et de préférence parmi, les polymères thermoplastiques présentant une température de fusion Tf élevée, à savoir à partir de 130°C et plus, comme les Polyamides (PA) et leur copolymères, le Polyméthacrylate de méthyle (PPMA) et ses copolymères, les Polycarbonates (PC), les polytéréphtalates d'éthylène (PET), le Poly(butylène téréphtalate) (PBT), les Polyether imides (PEI), le Polyphénylène sulfide (PPS), le Polyethercétonecétone (PEKK), le Polyetherethercétone (PEEK), les plymères fluorés comme le poly(fluorure de vinylidène) (PVDF), l'hexafluoropropylène (HFP), les copolymères fluoroéthylène / propylène (FEP), les copolymères d'éthylène avec soit le fluoroéthylène/propylène (FEP), soit le tétrafluoroéthylène (TFE), soit le perfluorométhylvinyl éther (PMVE), soit le chlorotrifluoroéthylène (CTFE).

Les polymères (ou résines) phénoxy sont des polyhydroxyéthers terminés par des groupe alpha-glycols. Elles résultent de la réaction entre le bisphénol A et l'épichlorhydrine ; leur masse moléculaire moyenne en masse est de 25 000 à 60 000. Elles sont compatibles avec les résines thermodurcissables du type résine epoxy.

Pour les polymères fluorés, on préfère utiliser un homopolymère du fluorure de vinylidène (VDF de formule CH₂=CF₂) ou copolymère du VDF comprenant en poids au moins 50% en masse de VDF et au moins un autre monomère copolymérisable avec le VDF. La teneur en VDF doit être supérieure à 80% en masse, voire mieux 90% en masse, pour assurer une bonne résistance mécanique à la pièce de structure, surtout lorsqu'elle est soumise à des contraintes thermiques. Le comonomère peut être un monomère fluoré choisi par exemple parmi le fluorure de vinyle; le trifluoroéthylène (VF3); le chlorotrifluoroéthylène (CTFE); le 1,2-difluoroéthylène; le tétrafluoroéthylène (TFE); l'éthylène tétrafluoroéthylène (ETFE), l'hexafluoropropylène (HFP); les perfluoro(alkyl vinyl) éthers tels que le perfluoro(méthyl vinyl)éther (PMVE), le perfluoro(éthyl vinyl) éther (PEVE) et le perfluoro(propyl vinyl) éther (PPVE); le perfluoro(1,3-dioxole); le perfluoro(2,2-diméthyl-1,3-dioxole) (PDD). De préférence, le comonomère éventuel est choisi parmi le chlorotrifluoroéthylène (CTFE), l'hexafluoropropylène (HFP), le trifluoroéthylène (VF3) et le tétrafluoroéthylène (TFE). Le comonomère peut aussi être une oléfine telle que l'éthylène ou le propylène. Le comonomère préféré est l'HFP.

Pour des pièces de structure devant résister à des températures élevées, outre les polymères fluorés, on utilise avantageusement selon l'invention les PAEK (PolyArylEtherKetone) tels que PEK, PEEK, PEKK, PEKEKK etc.

Par rapport aux procédés de l'art antérieur, le procédé selon la présente invention, est parfaitement bien adapté à des polymères présentant des températures de fusion élevées, et plus particulièrement supérieures à 130°C, tels que cités précédemment, comme le PPMA, les polyamides (PA), les polycarbonates (PC), les polymères fluorés, les PAEK, les polyéthylènes haute densité, ou encore le PET ou PBT.

De manière avantageuse, le polymère thermoplastique de constitution de la matrice d'imprégnation comprend au moins un oligomère ou un mélange d'oligomère choisi parmi des oligomères d'ester cyclique, des oligomères d'éther cyclique, et des oligomères de composé organominéral ledit au moins un oligomère étant introduit dans ledit polymère thermoplastique d'imprégnation fondu, dans des proportions en poids comprises entre 0,2 et 5%. Cet oligomère, ou ce mélange d'oligomères, agit en tant qu'agent lubrifiant dans la matrice polymère thermoplastique. Cet agent lubrifiant ne modifie en rien la structure du polymère dans lequel il est incorporé, contrairement aux plastifiants. La température de transition vitreuse Tg et la température de fusion Tf de la matrice polymère thermoplastique ne sont donc pas affectées par la présence de l'oligomère, ou du mélange d'oligomères, et demeurent inchangées.

Au sens de l'invention, un « oligomère » est un composé polymère de petite taille, comprenant entre 2 et 30 monomères, c'est-à-dire dont le degré de polymérisation est compris entre 2 et 30.

Lorsque l'oligomère, ou le mélange d'oligomères, est choisi parmi les oligomères d'ester cyclique, il est plus particulièrement choisi parmi :
- des oligomères de polyester tel que le poly(butylène téréphtalate) (PBT) cyclisé ou des mélanges en contenant, tels que la résine CBT 100 commercialisée par CYCLICS CORPORATION par exemple,
- les lactides, ou les mélanges en contenant,
- les oligomères cycliques de lactone, tel que par exemple le dimère de l'ε-caprolactone, ou les mélanges en contenant,
- des oligomères de carbonate et plus particulièrement des oligomères de carbonate d'alkylène, tels que le carbonate d'éthylène, le carbonate de propylène, ou le carbonate de butylène,
- et leurs mélanges.

Les lactides sont des dimères cycliques comprenant deux groupements fonctionnels ester et sont obtenus par estérification de l'acide lactique. Les lactides existent sous trois stéréo-isomères. Lorsqu'ils polymérisent au-delà du degré de polymérisation égal à 2, ils polymérisent par ouverture de cycle pour créer un oligomère ou un polymère d'acide lactique selon le degré de polymérisation.

Une lactone est un monomère obtenu par estérification et cyclisation intramoléculaire d'hydroxyacide. Il existe des dimères ou des trimères cycliques, tels que le dimère de l'ε- caprolactone. Au-delà de ce degré de polymérisation, l'oligomérisation implique une ouverture de son cycle.

Lorsque l'oligomère, ou le mélange d'oligomères, est choisi parmi les oligomères d'éther cyclique, il est plus particulièrement choisi parmi :
- des oligomères d'éthylène glycol,
- des oligomères de propylène glycol, et
- leurs mélanges.

Les oligomères d'éther cyclique, encore dénommés polyoléfine éther ou polyéther, sont fabriqués à partir d'éthylène glycol ou de propylène glycol. Leur oligomérisation implique une ouverture de leur cycle. Ces oligomères sont particulièrement bien adaptés pour imprégner des fibres naturelles, telles que des fibres de lin, de soie notamment d'araignée, de chanvre, ou de sisal.

Lorsque l'oligomère, ou le mélange d'oligomères, est choisi parmi les oligomères de composé organominéral, il est plus particulièrement choisi parmi :
- des oligomères de silane,
- des oligomères de siloxane, et
- leurs mélanges.

Les oligomères de silane, de formule (R₂Si)ₙ avec n compris entre 2 et 30, sont des oligomères qui peuvent être cycliques ou linéaires.

Ces oligomères de silane ou de siloxane sont particulièrement bien adaptés pour imprégner des fibres minérales telles que des fibres de verre, de bore ou de silice ou de carbone.

Quoiqu'il en soit l'oligomère, ou le mélange d'oligomères, utilisé doit toujours présenter une température de fusion Tf inférieure ou égale à la température de fusion Tf de la matrice thermoplastique d'imprégnation et une viscosité inférieure à celle de la matrice thermoplastique d'imprégnation, afin que l'oligomère puisse se mélanger correctement et de manière homogène dans la matrice thermoplastique fondue.

Les oligomères utilisés peuvent être fabriqués à partir de composant cyclisé, tel que les esters cycliques, les éthers cycliques ou les siloxanes par exemple. En revanche, dans ce cas, les oligomères ne sont pas forcément cycliques et peuvent être linéaires.

De manière avantageuse, lorsque les oligomères utilisés sont cycliques, ils présentent une structure totalement cristalline, c'est-à-dire que leurs molécules sont ordonnées selon un arrangement organisé et compact. Une telle structure cristalline présente une grande fluidité à l'état fondu, ce qui permet d'augmenter encore la lubrification de la matrice thermoplastique à l'état fondu. Ainsi, la résine CBT 100, l'oligomère de polycarbonate et certains oligomères de silane sont 100% cristallins.

Si l'agent lubrifiant n'est pas incorporé en quantité suffisante, alors il ne permet pas de lubrifier correctement le polymère thermoplastique de la matrice. En revanche, au-delà d'une certaine quantité, la matrice polymère est saturée. Lorsque la quantité en oligomère est trop importante, il peut même se produire une séparation de phase dans le polymère. Par conséquent, la limite supérieure utilisée reste inférieure au taux qui provoque cette séparation de phase. Ainsi, dans le cas particulier du poly(butylène téréphtalate) cyclisé ou de la résine CBT 100 par exemple, les proportions en oligomère dans la matrice polymère sont de préférence comprises entre 0,5 et 5% en poids, ce qui est suffisant pour obtenir la lubrification escomptée et la conservation des propriétés physiques (mécaniques) de la matrice de polymère thermoplastique et de l'interface avec le matériau fibreux imprégné.

L'incorporation de l'oligomère, ou du mélange d'oligomères, dans ces proportions n'affecte pas la température de transition vitreuse Tg ni la température de
fusion Tf du polymère thermoplastique, qui demeurent inchangées. La présence de l'oligomère permet en revanche de diminuer la température de transformation, encore dénommée température de mise en forme, du matériau fibreux imprégné.

En effet, la température de mise en forme doit toujours être supérieure à la température de fusion Tf de la matrice polymère. Or, lorsque l'on utilise une matrice polymère ayant une température de fusion Tf élevée, la température de mise en forme, ou de transformation, qui est supérieure à la température de fusion Tf, peut dégrader la matrice polymère thermoplastique. Le tableau I ci-dessous permet de mettre en évidence que la température de mise en forme du matériau composite peut être abaissée grâce à la présence de l'oligomère, ou du mélange d'oligomères, dans la matrice polymère.

**Tableau I**

| Matrice polymère | T° mise en forme sans CBT 100 | %CBT | T° mise en forme avec CBT 100 |
|---|---|---|---|
| Polycarbonate grade extrusion | 300°C | 0,20% | 280°C |
| Polycarbonate grade extrusion | 300°C | 2,00% | 260°C |
| Polyamide 6 | 290°C | 0,50% | 280°C |
| PBT | 310°C | 1,00% | 290°C |
| PEEK | 380°C | 1,00% | 360°C |
| PEI chargé | 350°C | 2,00% | 330°C |

Ainsi, lorsque la matrice polymère est en polycarbonate par exemple, sa température de mise en forme est de 300°C. En rajoutant de la résine CBT100 dans la matrice, la température de mise en forme peut être abaissée entre 260 et 280°C selon les proportions en résine CBT dans la matrice polymère thermoplastique. De même, lorsque la matrice polymère est en Polyétheréhtercétone (PEEK), la température de transformation est de 380°C et est abaissée à 360°C lorsque l'on y rajoute de la résine CBT à hauteur de 1% en poids dans la matrice.

On notera ici, que le poly(butylène téréphtalate) cyclisé et les mélanges en contenant, tels que la résine CBT 100 commercialisée par CYLICS CORPORATION, sont certes connus et utilisés en tant que plastifiants dans des matrices polymères. On pourra d'ailleurs, se reporter au document WO2010/046606 déposé par la demanderesse, qui utilise un tel plastifiant dans une matrice polymère pour augmenter sa flexibilité, diminuer sa température de transition vitreuse Tg, augmenter sa malléabilité et/ou son extensibilité. L'utilisation du plastifiant, permet en outre de réaliser des matériaux composites fortement chargés en nanotubes de carbone NTC par exemple. De même, le document WO2010/072975 décrit l'utilisation de fibres de Polyéthercétonecétone (PEKK) dans lesquelles sont dispersés des nanotubes de carbone grâce à l'utilisation d'agent dispersant pouvant être choisi parmi des plastifiants, tels que le poly(butylène téréphtalate) cyclisé et les mélanges en contenant tels que la résine CBT100.

Dans le cas de la présente invention, il s'agit d'un procédé de fabrication d'un matériau fibreux pré-imprégné dans lequel le poly(butylène téréphtalate) cyclisé et les mélanges en contenant, et plus généralement les oligomères cités précédemment, sont utilisés selon la teneur définie ci-haut, qui permet de ne pas provoquer une séparation de phase dans la matrice de polymère thermoplastique. Ce choix permet l'obtention d'un lubrifiant qui procure un abaissement notable de la température de mise en forme du polymère sans changer ses propriétés physiques et en particulier sans abaisser sa température de transition vitreuse Tg.

### Etape d'insertion

L'insertion de l'oligomère, ou du mélange d'oligomères, dans le polymère thermoplastique se fait avantageusement pas voie fondue, soit par malaxage, soit par extrusion. L'oligomère est incorporé dans la matrice thermoplastique fondue. L'oligomère n'a pas besoin d'être fondu avant d'être incorporé puisqu'il présente une température de fusion inférieure à celle de la matrice thermoplastique. Il fond alors lorsqu'il vient au contact de la matrice thermoplastique. La matrice thermoplastique à l'état fondu ainsi que l'oligomère, ou le mélange d'oligomères, sont introduits dans un dispositif à fort cisaillement pour être mélangés. Un tel dispositif est par exemple une extrudeuse à double vis co-rotatives ou un co-malaxeur comprenant un rotor pourvu d'ailettes adaptées à coopérer avec des dents montées sur un stator. Le mélange est récupéré après transformation de la matière fondue sous forme de bande par exemple.

Des exemples de co-malaxeurs utilisables selon l'invention sont les co-malaxeurs BUSS® MDK 46 et ceux de la série BUSS® MKS ou MX, commercialisés par la société BUSS AG, qui sont tous constitués d'un arbre à vis pourvu d'ailettes, disposé dans un fourreau chauffant éventuellement constitué de plusieurs parties et dont la paroi interne est pourvue de dents de malaxage adaptées à coopérer avec les ailettes pour produire un cisaillement de la matière malaxées. L'arbre est entrainé en rotation et pourvu d'un mouvement d'oscillation dans la direction axiale par un moteur.

Cette opération de malaxage ou d'extrusion est réalisée à une température provoquant le ramollissement ou la fusion du thermoplastique et donc de l'oligomère, dont la température de fusion est inférieure.

Le polymère thermoplastique renfermant l'oligomère, ou le mélange d'oligomères, peut alors être utilisé pour l'étape d'imprégnation du matériau fibreux.

Toutefois, avant cette étape d'imprégnation, on peut en outre rajouter un additif pour permettre d'améliorer encore la lubrification de la matrice polymère. Selon une autre caractéristique de l'invention, cet additif est constitué avantageusement par des charges telles que des particules conductrices d'électricité ou de chaleur.

Les charges utilisées comme additif selon l'invention, sont par exemple de la poudre de métal, ou des nanocharges d'origine carbonique, ou des nanotubes de carbure de silicium, de carbonitrure de bore, de nitrure de bore ou de silicium. De préférence on utilise des nanocharges d'origine carbonique comme par exemple les nanotubes de carbone, les nanofibres de carbone, du noir de carbone, ou des graphènes, des fibrilles, des graphites ou un mélange de ceux-ci en toutes proportions. Ces nanocharges sont sous la forme de poudre et peuvent être introduites dans la matrice thermoplastique d'imprégnation.

De préférence on utilise les nanotubes de carbone. On rappelle que par nanotubes de carbone NTC on entend un ou plusieurs tubes creux à une ou plusieurs parois de plan graphitique ou feuillets de graphène, coaxiaux, ou feuillet de graphène enroulé sur lui-même. Ce ou ces tubes, le plus souvent « débouchant », c'est-à-dire ouverts à une extrémité, ressemblent à plusieurs tubes de grillages disposés coaxialement ; en coupe transversales les NTC se présentent sous forme d'anneaux concentriques. Le diamètre externe des NTC est de 2 à 50nm. On parle de nanotubes de carbone monofeuillet (en anglais : Single Walled Carbon Nanotubes ou SWNT) ou de nanotubes de carbone multifeuillets (en anglais :Multi Walled Carbon Nanotubes ou MWNT).

Pour l'introduction de ces charges conductrices en tant qu'additif dans la matrice thermoplastique d'imprégnation, on procède de la façon suivante : on dispose les charges minérales sous forme de poudre directement dans le polymère thermoplastique fondu, avant ou après l'incorporation de l'oligomère. Le malaxage ou l'extrusion permet ensuite d'assurer une répartition homogène des charges dans la matrice.

De manière avantageuse, on utilise de préférence des NTC comme additif car, outre l'amélioration de la lubrification, ils permettent aussi de dissiper la chaleur générée par le cisaillement provoqué lors de la mise en forme du matériau composite.

Les nanotubes de carbone sont introduits dans la matrice thermoplastique d'imprégnation dans des proportions comprises entre 1 et 100 ppm. Ces proportions correspondent à un pourcentage pondéral minimum de l'ordre 0,01% par rapport au poids de la matrice thermoplastique contenant l'oligomère.

### Etape d'imprégnation :

Les fibres du matériau fibreux peuvent être imprégnées de différentes façons. En effet, grâce à la présence de l'oligomère dans la matrice thermoplastique d'imprégnation, le mouillage des fibres est considérablement amélioré, le thermoplastique se réparti beaucoup mieux autour des fibres, si bien qu'il devient possible d'utiliser n'importe quelle méthode d'imprégnation sans restriction.

Ainsi, une première méthode d'imprégnation consiste à faire passer le matériau fibreux dans un bain fondu de la matrice thermoplastique d'imprégnation comprenant l'oligomère et éventuellement additivée en NTC. Le matériau s'imprègne alors du mélange. Le matériau fibreux est ensuite refroidi, puis il peut être mis en forme selon la forme désirée. Lorsque les substrats fibreux sont sous forme de bande ou nappe, ils peuvent être mis en circulation dans le bain de polymère fluide, par exemple liquide contenant l'additif de NTC.

Par « fluide » on entend au sens de l'invention un milieu qui s'écoule sous son propre poids et qui n'a pas de forme propre (contrairement à un solide), comme un liquide qui peut être plus ou moins visqueux ou une poudre mise en suspension dans un gaz (de l'air par exemple) généralement connu sous le vocable « lit fluidisé ».

Une autre méthode, en continu, telle que décrite dans la demande de brevet WO2011/030052 consiste à mettre en forme la matrice thermoplastique contenant l'oligomère, ou le mélange d'oligomères, éventuellement additivée en NTC, sous forme de fibres. Cette deuxième série de fibres est mise au contact de la première série de fibres constituant le matériau fibreux, encore dénommées fibres de renfort. Les deux séries de fibres ainsi en contact sont ensuite chauffées, puis subissent un ou plusieurs calandrages pour être mises en forme de bande ou nappes par exemple.

Une troisième méthode consiste à réaliser un dépôt direct par extrusion d'un flux de la matrice thermoplastique-oligomère, éventuellement additivée en NTC, sur le matériau fibreux se présentant sous forme de nappe ou bande ou tresse. On peut en outre opérer un ou plusieurs calandrages, entre des cylindres chauffants, pour obtenir des nappes ou bandes présentant un excellent état de surface.

L'imprégnation du substrat fibreux peut également être faite suivant un procédé d'imprégnation en lit fluidisé, dans lequel la composition polymérique, à savoir la matrice thermoplastique contenant l'oligomère, ou le mélange d'oligomères, et éventuellement additivée en NTC, se trouve à l'état de poudre. La poudre est mise en suspension dans un gaz (de l'air par exemple) et le matériau fibreux est mis en circulation dans ce bain en lit fluidisé. Cette imprégnation est réalisée en maintenant le lit fluidisé à une température au moins égale à la température de fusion du polymère thermoplastique d'imprégnation. Le matériau fibreux ainsi imprégné peut ensuite être séché.

Le chauffage de la matrice d'imprégnation peut être réalisé au moyen d'un rayonnement infra-rouge par exemple. Il peut également être réalisé par induction ou par micro-onde. Ce dernier mode de chauffage est particulièrement bien adapté en présence de charges telles que des nanotubes de carbone NTC car ce mode de chauffage favorise le chauffage à coeur et permet l'obtention d'une meilleure répartition /dispersion des NTC au sein du matériau, conduisant à une meilleure homogénéité des propriétés physico-chimiques, et par conséquent de meilleures propriétés au global sur le produit final.

L'étape d'imprégnation est avantageusement associée à une mise en forme du matériau composite formé par le matériau fibreux imprégné de la matrice thermoplastique. Pour cela, le matériau encore chaud est disposé dans un ou plusieurs dispositifs de mise en forme successifs puis, une fois mis en forme, il est laissé à refroidir jusqu'à la température ambiante.

La mise en forme peut par exemple être réalisée par un ou plusieurs dispositifs de calandrage successifs. La mise en forme peut également être réalisée par extrusion pour créer des profilés de forme un peu plus complexe. Elle peut aussi être réalisée par thermoformage pour créer des pièces tridimensionnelles de forme complexe au moyen d'un moule dans lequel est placé le matériau ramolli. De telles pièces thermoformées sont par exemple destinées à former des coques de protection d'éléments électronique ou des pièces complexes de machines, ou des pièces de carrosserie automobile etc...

Une fois le matériau composite pré-imprégné mis en forme et refroidi à température ambiante, il est possible de lui faire subir un recuit afin de stabiliser sa structure.

Grâce au procédé qui vient d'être décrit, il est possible d'obtenir un matériau fibreux très bien imprégné et de créer des pièces tridimensionnelles de forme complexe ne présentant pas de défaut.

### Matériau fibreux :

Les fibres constituant le matériau fibreux peuvent être des fibres d'origine minérale, telles que les fibres de carbone ou les fibres de verre, ou bien des fibres d'origine organique, telles que les fibres à base de polymère thermoplastique ou thermodurcissable, ou bien encore des fibres d'origine végétale. On peut aussi utiliser des fibres de Kevlar ou des fibres d'aramide. Chacune de ces fibres de constitution peut être utilisée seule ou en mélange.

Les polymères entrant dans la constitution des fibres thermoplastiques sont exemplifiés dans la liste donnée à propos de la matrice polymère décrite ci-dessus.

Les polymères entrant dans la constitution des fibres thermodurcissables sont choisis parmi : les polyesters insaturés, les résines époxy, les esters vinyliques, les résines phénoliques, les polyuréthanes, les cyanoacrylates et les polyimides, tels que les résines bis-maléimide, les aminoplastes (résultant de la réaction d'une amine telle que la mélamine avec un aldéhyde tel que le glyoxal ou le formaldéhyde) et leurs mélanges.

Par polymères thermodurcissables ou encore « résines thermodurcissables », on entend un matériau généralement liquide à température ambiante, ou à bas point de fusion, qui est susceptible d'être durci, généralement en présence d'un durcisseur, sous l'effet de la chaleur, d'un catalyseur, ou d'une combinaison des deux, pour obtenir une résine thermodurcie. Celle-ci est constituée d'un matériau renfermant des chaînes polymères de longueur variable liées entre elles par des liaisons covalentes, de manière à former un réseau tridimensionnel. Sur le plan de ses propriétés, cette résine thermodurcie est infusible et insoluble. Elle peut être ramollie en la chauffant au-dessus de sa température de transition vitreuse (Tg) mais, une fois qu'une forme lui a été conférée, elle ne peut être remise en forme ultérieurement par chauffage.

Les polyesters insaturés résultent de la polymérisation par condensation d'acides dicarboxyliques renfermant un composé insaturé (tel que l'anhydride maléique ou l'acide fumarique) et de glycols tels que le propylène glycol. Ils sont généralement durcis par dilution dans un monomère réactif, tel que le styrène, puis réaction de ce dernier avec les insaturations présentes sur ces polyesters, généralement à l'aide de peroxydes ou d'un catalyseur, en présence de sels de métaux lourds ou d'une amine, ou encore à l'aide d'un photo-initateur, d'un rayonnement ionisant, ou d'une combinaison de ces différentes techniques.

Les esters vinyliques comprennent les produits de la réaction d'époxydes avec l'acide (méth)acrylique. Ils peuvent être durcis après dissolution dans le styrène (de façon similaire aux résines polyesters) ou à l'aide de peroxydes organiques.

Les résines époxy sont constituées de matériaux contenant un ou plusieurs groupes oxiranes, par exemple de 2 à 4 fonctions oxirane par molécule. Dans le cas où elles sont polyfonctionnelles, ces résines peuvent être constituées de polymères linéaires porteurs de groupes époxy terminaux, ou dont le squelette comprend des groupes époxy, ou encore dont le squelette porte des groupes époxy pendants. Elles nécessitent généralement comme agent durcisseur un anhydride d'acide ou une amine.

Ces résines époxy peuvent résulter de la réaction de l'épichlorhydrine sur un bisphénol tel que le bisphénol A. Il peut en variante s'agir d'alkyl- et/ou alkénylglycidyl éthers ou esters; de polyglycidyl éthers de mono- et polyphénols éventuellement substitués, notamment de polyglycidyl éthers de bisphénol A ; de polyglycidyl éthers de polyols; de polyglycidyl éthers d'acides polycarboxyliques aliphatiques ou aromatiques ; de polyglycidyl esters d'acides polycarboxyliques ; de polyglycidyl éthers de novolac.. En variante encore, il peut s'agir de produits de la réaction de l'épichlorhydrine sur des amines aromatiques ou de dérivés glycidyle de mono- ou diamines aromatiques. On peut également utiliser dans la présente invention des époxydes cycloaliphatiques et de préférence les diglycidyl éthers de bisphénol A (ou DGEBA), F ou A/F

Parmi les durcisseurs ou réticulants, on peut utiliser des produits de type diamine ou tri-amine fonctionnelle utilisés à des teneurs allant de 1 à 5 %.

Pour les températures de chauffage des fibres thermodurcissables, on parle de températures de fusion ou de ramollissement, elles sont de l'ordre de 50°C à 80°C, typiquement 60°C.

Après rajout d'un durcisseur (ou réticulant), la température de fusion ou de ramollissement est amenée alors entre 100°C et 150°C, typiquement 120°C.

Le chauffage à la température de fusion Tf est associé à une mise en forme du matériau composite final au moyen d'un dispositif de calandrage, d'extrusion ou de thermoformage par exemple.

Concernant les fibres minérales qui peuvent entrer dans la constitution du matériau fibreux, ce sont notamment les fibres de carbone, de verre, de bore, de silice, les fibres naturelles comme le lin, la soie notamment d'araignée, le chanvre, le sisal. Ces fibres peuvent être utilisées pures, traitées ou bien enduites d'une couche d'enduction, en vue de faciliter l'adhérence/imprégnation de la matrice de polymère thermoplastique ou leur manipulation avant imprégnation par fusion de ce polymère.

Des fibres organiques peuvent être mélangées aux fibres minérales pour former les fibres du matériau fibreux et qui sont destinées à être imprégnée de polymère après la fonte de la matrice de polymère thermoplastique. Dans ce cas on choisira bien sûr des fibres organiques c'est-à-dire des fibres de polymère dont la température de fusion est supérieure à la température de fusion Tf de la matrice de polymère thermoplastique que l'on fond. Ainsi, il n'y a aucun risque de fusion pour les fibres organiques de constitution du matériau fibreux.

Le matériau fibreux réalisé avec le procédé est obtenu avantageusement avec 50% de fibres minérales et 50% de fibres de polymère organique thermoplastique ou thermodurcissable, de préférence avec 30% de fibres minérales et 70% de fibres de polymère organique thermoplastique ou thermodurcissable.

## Revendications

1. Procédé de fabrication d'un matériau fibreux pré-imprégné comprenant une étape d'imprégnation dudit matériau fibreux par une matrice constituée d'un polymère thermoplastique à l'état fondu, **caractérisé en ce que** préalablement à l'étape d'imprégnation, une étape d'insertion consiste à incorporer dans ledit polymère thermoplastique d'imprégnation, un agent lubrifiant comprenant au moins un oligomère ou un mélange d'oligomères choisi parmi des oligomères d'ester cyclique, des oligomères d'éther cyclique, des oligomères de composé organominéral et **en ce que** ledit au moins un oligomère est introduit dans ledit polymère thermoplastique d'imprégnation fondu, dans des proportions en poids comprises entre 0,2 et 5%.

2. Procédé de fabrication d'un matériau fibreux pré-imprégné selon la revendication 1, **caractérisé en ce que** lorsque ledit au moins un oligomère est choisi parmi les oligomères d'ester cyclique, il est plus particulièrement choisi parmi :
- des oligomères de polyester cyclique, tels que le poly(butylène téréphtalate) cyclisé ou des mélanges en contenant,
- des lactides,
- des oligomères cycliques de lactone,
- des oligomères de carbonates d'alkylène choisis parmi le carbonate d'éthylène, le carbonate de propylène ou le carbonate de butylène, et
- leurs mélanges.

3. Procédé de fabrication d'un matériau fibreux pré-imprégné selon la revendication 1, **caractérisé en ce que** lorsque ledit au moins un oligomère est choisi parmi les oligomères d'éther cyclique, il est plus particulièrement choisi parmi :
- des oligomères d'éthylène glycol,
- des oligomères de propylène glycol, et
- leurs mélanges.

4. Procédé de fabrication d'un matériau fibreux pré-imprégné selon la revendication 1, **caractérisé en ce que** lorsque ledit au moins un oligomère est choisi parmi les oligomères de composé organominéral, il est plus particulièrement choisi parmi :
- des oligomères de silane,
- des oligomères de siloxane, et
- leurs mélanges.

5. Procédé de fabrication d'un matériau fibreux pré-imprégné selon l'une des revendications 1 à 4, **caractérisé en ce que** ledit au moins un oligomère présente une température de fusion Tf inférieure ou égale à celle dudit polymère thermoplastique d'imprégnation et une viscosité inférieure à celle dudit polymère thermoplastique d'imprégnation.

6. Procédé de fabrication d'un matériau fibreux pré-imprégné selon l'une des revendications 1 à 5, **caractérisé en ce que** au moment de l'étape d'insertion, ledit polymère thermoplastique d'imprégnation est chauffé à une température au moins égale à sa température de fusion, et ledit au moins un oligomère est incorporé dans ledit polymère thermoplastique d'imprégnation par malaxage ou extrusion.

7. Procédé de fabrication d'un matériau fibreux pré-imprégné selon l'une des revendications 1 à 6, **caractérisé en ce que** l'étape d'imprégnation est réalisée selon une méthode choisie parmi les méthodes suivantes :
- passage dudit matériau fibreux dans un bain fondu dudit polymère thermoplastique d'imprégnation,
- dépôt par extrusion d'un flux dudit polymère thermoplastique d'imprégnation sur ledit matériau fibreux,
- imprégnation par passage dudit matériau fibreux dans un lit fluidisé de particules dudit polymère thermoplastique d'imprégnation, ou
- mise en contact dudit polymère thermoplastique d'imprégnation se présentant sous forme de fibres avec les fibres du matériau fibreux, puis chauffage de l'ensemble.

8. Procédé de fabrication d'un matériau fibreux pré-imprégné selon l'une des revendications 1 à 7, **caractérisé en ce que** les polymères thermoplastiques entrant dans la constitution dudit polymère thermoplastique d'imprégnation sont choisis parmi :
- les polyéthylènimines (PEI),
- les polyimides (PI),
- les polyoléfines telles que le polyéthylène notamment haute densité, le polypropylène et les copolymères d'éthylène et/ou de polypropylène ;
- les polyuréthanes thermoplastiques (TPU) ;
- les polyesters tels que les polyhydroxyalcanoates ;
- le Polyméthacrylate de méthyle (PPMA) ;
- les Polycarbonates (PC) ;
- les polytéréphtalates d'éthylène (PET) ou de butylène (PBT) ;
- les polyphenylenes sulfide (PPS) ;
- les polychlorures de vinyle ;
- les polymères siliconés ou fluorosiliconés ;
- les poly(alcool de vinyle) ;
- les polyaryléther cétones (PAEK :PolyArylEtherKetone) telle que la polyétheréther cétone (PEEK) et la polyéthercétone cétone (PEKK) ;
- les polyamides tels que polyamide tel que le polyamide 6 (PA-6), le polyamide 11 (PA-11), le polyamide 12 (PA-12), le polyamide 6.6 (PA-6.6), le polyamide 4.6 (PA-4.6), le polyamide 6.10 (PA-6.10), le polyamide 6.12 (PA-6.12), les polyamides aromatiques, en particulier les polyphtalamides et l'aramide, et les copolymères blocs, notamment polyamide/polyéther ;
- les polymères fluorés comprenant au moins un monomère de formule (I) :
CFX=CHX' (I)
où X et X' désignent indépendamment un atome d'hydrogène ou d'halogène (en particulier de fluor ou de chlore) ou un radical alkyle perhalogéné (en particulier perfluoré), et de préférence X=F et X'=H, tels que le poly(fluorure de vinylidène) (PVDF), de préférence sous forme α, les copolymères de fluorure de vinylidène (PVDF), de préférence sous forme α, les copolymères de fluorure de vinylidène avec par exemple l'hexafluoropropylène (HFP), les copolymères fluoroéthylène / propylène (FEP), les copolymères d'éthylène avec soit le fluoroéthylène/propylène (FEP), soit le tétrafluoroéthylène (TFE), soit le perfluorométhylvinyl éther (PMVE), soit le chlorotrifluoroéthylène (CTFE),
- les polymères (ou résines) phénoxy,
- leurs mélanges
et de préférence parmi, les polymères thermoplastiques présentant une température de fusion Tf élevée, à savoir à partir de 130°C et plus, comme les Polyamides (PA) et leur copolymères, le Polyméthacrylate de méthyle (PPMA) et ses copolymères, les Polycarbonates (PC), les polytéréphtalates d'éthylène (PET), le Poly(butylène téréphtalate) (PBT), les Polyether imides (PEI), le Polyphénylène sulfide (PPS), le Polyethercétonecétone (PEKK), le Polyetherethercétone (PEEK), les plymères fluorés comme le poly(fluorure de vinylidène) (PVDF), l'hexafluoropropylène (HFP), les copolymères fluoroéthylène / propylène (FEP), les copolymères d'éthylène avec soit le fluoroéthylène/propylène (FEP), soit le tétrafluoroéthylène (TFE), soit le perfluorométhylvinyl éther (PMVE), soit le chlorotrifluoroéthylène (CTFE).

9. Procédé de fabrication d'un matériau fibreux pré-imprégné selon l'une des revendications 1 à 8, **caractérisé en ce que** l'étape d'imprégnation, consistant à chauffer ledit polymère thermoplastique d'imprégnation à sa température de fusion, est associée à une mise en forme du matériau composite formé par ledit matériau fibreux et ledit polymère thermoplastique d'imprégnation.

10. Procédé de fabrication d'un matériau fibreux pré-imprégné selon l'une des revendications 1 à 9, **caractérisé en ce que** au moment de l'étape d'insertion dudit oligomère, on dispose en outre dans le polymère thermoplastique fondu, d'un additif constitué par des charges minérales conductrices sous forme de poudre, choisies parmi : de la poudre de métal, ou des nanotubes de carbure de silicium, de carbonitrure de bore, de nitrure de bore ou de silicium, ou des nanocharges d'origine carbonique, telles que des nanotubes de carbone, les nanofibres de carbone, du noir de carbone, des graphènes, des fibrilles, des graphites ou un mélange de ceux-ci.

11. Procédé de fabrication d'un matériau fibreux pré-imprégné selon la revendication 10, **caractérisé en ce que** les charges minérales conductrices utilisées comme additif sont des nanotubes de carbone.

12. Procédé de fabrication d'un matériau fibreux pré-imprégné selon l'une des revendications 1 à 11, **caractérisé en ce que** ledit polymère thermoplastique d'imprégnation est chauffé au moyen d'un rayonnement infrarouge, par induction ou par micro-onde.

13. Matériau composite pré-imprégné comprenant des fibres de renfort enrobées dans une matrice de polymère thermoplastique, **caractérisé en ce que** la matrice de polymère thermoplastique comprend un agent lubrifiant comprenant au moins un oligomère ou un mélange d'oligomères choisi parmi des oligomères d'ester cyclique, des oligomères d'éther cyclique, des oligomères de composé organominéral ledit au moins un oligomère ou mélange d'oligomères étant introduit dans ledit polymère thermoplastique dans des proportions en poids comprises entre 0,2 et 5%.

## Patentansprüche

1. Verfahren zur Herstellung eines vorimprägnierten Fasermaterials, umfassend einen Schritt des Imprägnierens des Fasermaterials mit einer Matrix, die aus einem thermoplastischen Polymer in geschmolzenem Zustand gebildet ist, **dadurch gekennzeichnet, dass** vor dem Imprägnierschritt ein Einführschritt darin besteht, in das thermoplastische Imprägnierpolymer ein Gleitmittel einzuarbeiten, das wenigstens ein Oligomer oder eine Mischung aus Oligomeren umfasst, ausgewählt aus Oligomeren aus einem cyclischen Ester, Oligomeren aus einem cyclischen Ether, Oligomeren aus einer organomineralischen Verbindung, und dass das wenigstens eine Oligomer dem geschmolzenen thermoplastischen Imprägnierpolymer in Gewichtsverhältnissen zwischen 0,2 und 5 % beigefügt wird.

2. Verfahren zur Herstellung eines vorimprägnierten Fasermaterials nach Anspruch 1, **dadurch gekennzeichnet, dass**, wenn das wenigstens eine Oligomer aus Oligomeren aus einem cyclischen Ester ausgewählt wird, es insbesondere aus Folgendem ausgewählt wird:
- Oligomeren aus cyclischem Polyester wie cyclisiertem Poly(butylenterephthalat) oder Mischungen, die diese enthalten,
- Lactiden,
- cyclischen Lacton-Oligomeren,
- Oligomeren aus Alkylencarbonaten, ausgewählt aus Ethylencarbonat, Propylencarbonat oder Butylencarbonat, und
- ihren Mischungen.

3. Verfahren zur Herstellung eines vorimprägnierten Fasermaterials nach Anspruch 1, **dadurch gekennzeichnet, dass**, wenn das wenigstens eine Oligomer aus Oligomeren aus einem cyclischen Ether ausgewählt wird, es insbesondere aus Folgendem ausgewählt wird:
- Ethylenglycol-Oligomeren,
- Propylenglycol-Oligomeren und
- ihren Mischungen.

4. Verfahren zur Herstellung eines vorimprägnierten Fasermaterials nach Anspruch 1, **dadurch gekennzeichnet, dass**, wenn das wenigstens eine Oligomer aus Oligomeren aus einer organomineralischen Verbindung ausgewählt wird, es insbesondere aus Folgendem ausgewählt wird:
- Silan-Oligomeren,
- Siloxan-Oligomeren, und
- ihren Mischungen.

5. Verfahren zur Herstellung eines vorimprägnierten Fasermaterials nach einem der Ansprüche 1 bis 4, **dadurch gekennzeichnet, dass** das wenigstens eine Oligomer eine Schmelztemperatur Tf unter oder gleich jener des thermoplastischen Imprägnierpolymers und eine Viskosität unter jener des thermoplastischen Imprägnierpolymers aufweist.

6. Verfahren zur Herstellung eines vorimprägnierten Fasermaterials nach einem der Ansprüche 1 bis 5, **dadurch gekennzeichnet, dass** zum Zeitpunkt des Einführschritts das thermoplastische Imprägnierpolymer auf eine Temperatur erhitzt wird, die wenigstens gleich seiner Schmelztemperatur ist, und das wenigstens eine Oligomer durch Rühren oder Strangpressen in das thermoplastische Imprägnierpolymer eingearbeitet wird.

7. Verfahren zur Herstellung eines vorimprägnierten Fasermaterials nach einem der Ansprüche 1 bis 6, **dadurch gekennzeichnet, dass** der Imprägnierschritt nach einer Methode durchgeführt wird, die aus den folgenden Methoden ausgewählt wird:
- Überführen des Fasermaterials in ein Schmelzbad des thermoplastischen Imprägnierpolymers,
- Ablagern eines Flusses des thermoplastischen Imprägnierpolymers auf dem Fasermaterial durch Strangpressen,
- Imprägnieren durch Überführen des Fasermaterials in ein Wirbelbett von Partikeln des thermoplastischen Imprägnierpolymers, oder
- Inkontaktbringen des in Form von Fasern vorliegenden thermoplastischen Imprägnierpolymers mit den Fasern des Fasermaterials, anschließend Erhitzen der Gesamtheit.

8. Verfahren zur Herstellung eines vorimprägnierten Fasermaterials nach einem der Ansprüche 1 bis 7, **dadurch gekennzeichnet, dass** die thermoplastischen Polymere, die bei der Bildung des thermoplastischen Imprägnierpolymers verwendet werden, ausgewählt werden aus:
- Polyethyleniminen (PEI),
- Polyimiden (PI),
- Polyolefinen wie Polyethylen, insbesondere hoher
- Dichte, Polypropylen und Copolymeren aus Ethylen und/oder Polypropylen;
- thermoplastischen Polyurethanen (TPU);
- Polyestern wie Polyhydroxyalcanoaten;
- Polymethylmethacrylat (PPMA);
- Polycarbonaten (PC);
- Polyethylenterephthalat (PET) oder Polybutylenterephthalat (PBT);
- Polyphenylensulfiden (PPS);
- Polyvinylchloriden;
- Silikon- oder Fluorsilikonpolymeren;
- Poly(vinylalkoholen);
- Polyaryletherketonen (PAEK: PolyArylEtherKeton) wie Polyetheretherketon (PEEK) und Polyetherketonketon (PEKK);
- Polyamiden wie Polyamid wie Polyamid 6 (PA-6), Polyamid 11 (PA-11), Polyamid 12 (PA-12), Polyamid 6.6 (PA-6.6), Polyamid 4.6 (PA-4.6), Polyamid 6.10 (PA-6.10), Polyamid 6.12 (PA-6.12), aromatische Polyamide, insbesondere Polyphtalamide und Aramid, und BlockCopolymere, vor allem Polyamid/Polyether;
- Fluorpolymeren, umfassend wenigstens ein Monomer mit der Formel (I):
CFX=CHX' (I)
- wobei X und X' unabhängig voneinander für Folgendes stehen: ein Wasserstoff- oder Halogenatom (insbesondere Fluor oder Chlor) oder ein perhalogeniertes (insbesondere perfluoriertes) Alkylradikal, wobei vorzugsweise X=F und X'=H, wie Poly(vinylidenfluorid) (PVDF), vorzugsweise in α-Form, Vinylidenfluorid-(PVDF)-Copolymere, vorzugsweise in α-Form, Vinylidenfluorid-Copolymere zum Beispiel mit Hexafluorpropylen (HFP), Fluorethylen/Propylen- (FEP)-Copolymere, Ethylen-Copolymere entweder mit Fluorethylen/Propylen (FEP) oder Tetrafluorethylen (TFE) oder Perfluormethylvinylether (PMVE) oder Chlortrifluorethylen (CTFE),
- Phenoxy-Polymeren (oder -Harze),
- ihren Mischungen
- und vorzugsweise aus thermoplastischen Polymeren, die eine hohe Schmelztemperatur Tf, nämlich ab 130 °C und mehr, aufweisen wie Polyamide (PA) und ihre Copolymere, Polymethylmethacrylat (PPMA) und seine Copolymere, Polycarbonate (PC), Polyethylenterephthalate (PET), Poly(butylenterephthalat) (PBT), Polyetherimide (PEI), Polyphenylensulfid (PPS), Polyetherketonketon (PEKK), Polyetheretherketon (PEEK), Fluorpolymere wie Poly(vinylidenfluorid) (PVDF), Hexafluorpropylen (HFP), Fluorethylen/Propylen-(FEP)-Copolymere, Ethylen-Copolymere entweder mit Fluorethylen/Propylen (FEP) oder Tetrafluorethylen (TFE) oder Perfluormethylvinylether (PMVE) oder Chlortrifluorethylen (CTFE).

9. Verfahren zur Herstellung eines vorimprägnierten Fasermaterials nach einem der Ansprüche 1 bis 8, **dadurch gekennzeichnet, dass** der Imprägnierschritt, der darin besteht, das thermoplastische Imprägnierpolymer auf seine Schmelztemperatur zu erhitzen, mit einer Formung des Verbundmaterials verbunden wird, das durch das Fasermaterial und das thermoplastische Imprägnierpolymer gebildet wird.

10. Verfahren zur Herstellung eines vorimprägnierten Fasermaterials nach einem der Ansprüche 1 bis 9, **dadurch gekennzeichnet, dass** zum Zeitpunkt des Schritts des Einführens des Oligomers dem geschmolzenen thermoplastischen Polymer darüber hinaus ein Additiv zugesetzt wird, das durch leitende mineralische Füllstoffe in Pulverform gebildet wird, ausgewählt aus: Metallpulver oder Nanoröhren aus Siliciumcarbid, Borcarbonitrid, Bor- oder Siliciumnitrid, oder Nanofüllstoffen aus Kohlenstoff wie Kohlenstoff-Nanoröhren, Kohlenstoff-Nanofasern, Rußschwarz, Graphenen, Fibrillen, Graphiten oder einer Mischung davon.

11. Verfahren zur Herstellung eines vorimprägnierten Fasermaterials nach Anspruch 10, **dadurch gekennzeichnet, dass** die als Additiv verwendeten leitenden mineralischen Füllstoffe Kohlenstoff-Nanoröhren sind.

12. Verfahren zur Herstellung eines vorimprägnierten Fasermaterials nach einem der Ansprüche 1 bis 11, **dadurch gekennzeichnet, dass** das thermoplastische Imprägnierpolymer mittels einer Infrarotstrahlung, durch Induktion oder durch Mikrowelle erhitzt wird.

13. Vorimprägniertes Verbundmaterial, das Verstärkungsfasern umfasst, die in eine Matrix aus thermoplastischem Polymer eingebettet sind, **dadurch gekennzeichnet, dass** die Matrix aus thermoplastischem Polymer ein Gleitmittel umfasst, das wenigstens ein Oligomer oder eine Mischung aus Oligomeren umfasst, ausgewählt aus Oligomeren aus einem cyclischen Ester, Oligomeren aus einem cyclischen Ether, Oligomeren aus einer organomineralischen Verbindung, wobei das wenigstens eine Oligomer oder die Oligomermischung dem thermoplastischen Polymer in Gewichtsverhältnissen zwischen 0,2 und 5 % beigefügt ist.

## Claims

1. Process for manufacturing a pre-impregnated fibrous material, comprising a step of impregnation of said fibrous material with a matrix consisting of a thermoplastic polymer in the molten state, **characterized in that**, prior to the impregnation step, an insertion step consists in incorporating, into said impregnating thermoplastic polymer, a lubricant comprising at least one oligomer or a mixture of oligomers, chosen from oligomers of a cyclic ester, oligomers of a cyclic ether and oligomers of an organomineral compound and **in that** said at least one oligomer is introduced into said molten impregnating thermoplastic polymer in proportions by weight of between 0.2% and 5%.

2. Process for manufacturing a pre-impregnated fibrous material according to Claim 1, **characterized in that**, when said at least one oligomer is chosen from oligomers of a cyclic ester, it is more particularly chosen from:
- oligomers of a cyclic polyester, such as cyclized poly(butylene terephthalate), or mixtures containing same,
- lactides,
- cyclic oligomers of a lactone,
- oligomers of alkylene carbonates chosen from ethylene carbonate, propylene carbonate or butylene carbonate, and
- mixtures thereof.

3. Process for manufacturing a pre-impregnated fibrous material according to Claim 1, **characterized in that**, when said at least one oligomer is chosen from oligomers of a cyclic ether, it is more particularly chosen from:
- ethylene glycol oligomers,
- propylene glycol oligomers, and
- mixtures thereof.

4. Process for manufacturing a pre-impregnated fibrous material according to Claim 1, **characterized in that**, when said at least one oligomer is chosen from oligomers of an organomineral compound, it is more particularly chosen from:
- silane oligomers,
- siloxane oligomers, and
- mixtures thereof.

5. Process for manufacturing a pre-impregnated fibrous material according to one of Claims 1 to 4, **characterized in that** said at least one oligomer has a melting point Mp below or equal to that of said impregnating thermoplastic polymer and a viscosity below that of said impregnating thermoplastic polymer.

6. Process for manufacturing a pre-impregnated fibrous material according to one of Claims 1 to 5, **characterized in that**, at the time of the insertion step, said impregnating thermoplastic polymer is heated to a temperature at least equal to its melting point, and said at least one oligomer is incorporated into said impregnating thermoplastic polymer by kneading or extrusion.

7. Process for manufacturing a pre-impregnated fibrous material according to one of Claims 1 to 6, **characterized in that** the impregnation step is carried out according to a method chosen from the following methods:
- passing said fibrous material through a molten bath of said impregnating thermoplastic polymer,
- deposit by extrusion of a stream of said impregnating thermoplastic polymer on said fibrous material,
- impregnation by passing said fibrous material through a fluidized bed of particles of said impregnating thermoplastic polymer, or
- bringing said impregnating thermoplastic polymer which is in the form of fibers into contact with the fibers of the fibrous material, then heating the assembly.

8. Process for manufacturing a pre-impregnated fibrous material according to one of Claims 1 to 7, **characterized in that** the thermoplastic polymers which go to constitute said impregnating thermoplastic polymer are chosen from:
- polyethyleneimines (PEIs);
- polyimides (PIs) ;
- polyolefins, such as polyethylene, in particular high-density polyethylene, polypropylene and copolymers of ethylene and/or of polypropylene;
- thermoplastic polyurethanes (TPUs);
- polyesters, such as polyhydroxyalkanoates;
- poly(methyl methacrylate) (PMMA);
- polycarbonates (PCs);
- polyethylene terephthalates (PETs) or polybutylene terephthalates (PBTs);
- polyphenylene sulfides (PPSs);
- polyvinyl chlorides;
- silicone or fluorosilicone polymers;
- poly(vinyl alcohol)s;
- polyaryl ether ketones (PAEKs), such as polyether ether ketone (PEEK) and polyether ketone ketone (PEKK);
- polyamides, such as polyamide such as polyamide 6 (PA-6), polyamide 11 (PA-11), polyamide 12 (PA-12), polyamide 6.6 (PA-6.6), polyamide 4.6 (PA-4.6), polyamide 6.10 (PA-6.10), polyamide 6.12 (PA-6.12), aromatic polyamides, in particular polyphthalamides and aramid, and block copolymers, in particular polyamide/polyether;
- fluoropolymers comprising at least one monomer of formula (I):
CFX=CHX' (I)
wherein X and X' independently denote a hydrogen or halogen (in particular fluorine or chlorine) atom or a perhalogenated (in particular perfluorinated) alkyl radical, and preferably X = F and X' = H, such as poly(vinylidene fluoride) (PVDF), preferably in α form, copolymers of vinylidene fluoride (PVDF), preferably in α form, copolymers of vinylidene fluoride with for example hexafluoropropylene (HFP), fluoroethylene/propylene (FEP) copolymers, copolymers of ethylene with either fluoroethylene/propylene (FEP) or tetrafluoroethylene (TFE) or perfluoromethyl vinyl ether (PMVE) or chlorotrifluoroethylene (CTFE),
- phenoxy polymers (or resins), and
- mixtures thereof;
and preferably from thermoplastic polymers with a high melting point Mp, namely starting from 130°C and above, for instance polyamides (PAs) and copolymers thereof, poly(methyl methacrylate) (PMMA) and copolymers thereof, polycarbonates (PCs), polyethylene terephthalates (PETs), poly(butylene terephthalate) (PBT), polyether imides (PEIs), polyphenylene sulfide (PPS), polyether ketone ketone (PEKK), polyether ether ketone (PEEK), fluoropolymers, for instance poly(vinylidene fluoride) (PVDF) or hexafluoropropylene (HFP), fluoroethylene/propylene (FEP) copolymers, copolymers of ethylene with either fluoroethylene/propylene (FEP) or tetrafluoroethylene (TFE) or perfluoromethyl vinyl ether (PMVE) or chlorotrifluoroethylene (CTFE).

9. Process for manufacturing a pre-impregnated fibrous material according to one of Claims 1 to 8, **characterized in that** the impregnation step, consisting in heating said impregnating thermoplastic polymer to its melting point, is combined with forming of the composite material made up of said fibrous material and said impregnating thermoplastic polymer.

10. Process for manufacturing a pre-impregnated fibrous material according to one of Claims 1 to 9, **characterized in that**, at the time of the step of insertion of said oligomer, there is also in the molten thermoplastic polymer an additive consisting of conductive mineral fillers in powder form, chosen from: metal powder, or silicon carbide, boron carbonitride, boron nitride or silicon nitride nanotubes, or nanofillers of carbon origin, such as carbon nanotubes, carbon nanofibers, carbon black, graphenes, fibrils, graphites, or a mixture thereof.

11. Process for manufacturing a pre-impregnated fibrous material according to Claim 10, **characterized in that** the conductive mineral fillers used as additive are carbon nanotubes.

12. Process for manufacturing a pre-impregnated fibrous material according to one of Claims 1 to 11, **characterized in that** said impregnating thermoplastic polymer is heated by means of infrared radiation, by induction or by microwave.

13. Pre-impregnated composite material comprising reinforcing fibers coated in a thermoplastic polymer matrix, **characterized in that** the thermoplastic polymer matrix comprises a lubricant comprising at least one oligomer, or a mixture of oligomers, chosen from oligomers of a cyclic ester, oligomers of a cyclic ether and oligomers of an organomineral compound, said at least one oligomer or mixture of oligomers being introduced into said thermoplastic polymer in proportions by weight of between 0.2% and 5%.
